# EUROPÄISCHE PATENTSCHRIFT

(11) **EP 2 054 791 B1**
(45) Veröffentlichungstag und Bekanntmachung des Hinweises auf die Patenterteilung: **14.12.2016**
(21) Anmeldenummer: 08736260.4
(22) Anmeldetag: 16.04.2008
(51) Int. Cl.: G06F 3/033

(54) **TOUCHPADANORDNUNG**
TOUCHPAD ARRANGEMENT
ENSEMBLE BLOC À EFFLEUREMENT

(30) Priorität: 11.05.2007 DE 102007022085
(43) Veröffentlichungstag der Anmeldung: 06.05.2009
(73) Patentinhaber: Continental Automotive GmbH, 30165 Hannover (DE)
(72) Erfinder: NAU, Dieter, 35578 Wetzlar (DE); BENDER, Klaus-Werner, 35516 Muenzenberg (DE)
(86) Internationale Anmeldenummer: PCT/EP2008/054579
(87) Internationale Veröffentlichungsnummer: WO 2008/138700

(56) Entgegenhaltungen:
- WO-A-02/073587
- WO-A-2005/019987
- WO-A-2006/029974
- JP-A- 2000 200 141
- US-A1- 2004 075 676

## Beschreibung

Die Erfindung bezieht sich auf eine Touchpadanordnung mit einem Touchpad, das eine sensitive Bedienoberfläche besitzt und durch eine Führungsmechanik verkippungsfrei geführt in einer Bewegungsrichtung zwischen einer angehobenen Ruheposition und einer abgesenkten Absenkposition bewegbar ist.

Bei einer derartigen Touchpadanordnung soll während der Betätigung durch den Benutzer eine Absenkung der sensitiven Bedienoberfläche um etwa 0,5 bis 1 mm erfolgen, wobei die Bedienoberfläche im Wesentlichen senkrecht zur Betätigungsrichtung orientiert bleiben soll. Bei großflächigen Touchpads entsteht jedoch bei einer Betätigung im Randbereich des Touchpads ein großes Kippmoment, welches zu einer Verkippung des Touchpads führt.

Um dies zu vermeiden ist es bekannt, das Touchpad auf ein Scherengetriebe aufzulegen. Bei Betätigung des Touchpads in einem Randbereich wird durch das Scherengetriebe der gegenüberliegende Randbereich mit in Bewegungsrichtung bewegt. Die Kraftübertragung erfolgt dabei durch Bügel des Scherengetriebes, wobei die Kraft in die eine Richtung durch Biegebeanspruchung und in der dazu senkrechten Richtung durch Torsionsbeanspruchung weitergeleitet wird.

Wenn das Scherengetriebe nicht unterhalb des Touchpads angeordnet werden soll, müssen die Abmessungen des Scherengetriebes auf die Abmessungen und die Größe des Touchpads abgestimmt sein.

Aufgabe der Erfindung ist es daher eine Touchpadanordnung der eingangs genannten Art zu schaffen, die bei Touchpads unterschiedlicher Größe anwendbar ist und einen einfachen Aufbau aufweist.

Diese Aufgabe wird erfindungsgemäß dadurch gelöst, dass an mindestens zwei einander gegenüberliegenden Seitenbereichen des Touchpads jeweils eine Hebelmechanik angeordnet ist, die aus zwei annähernd längs sich zueinander erstreckenden Hebeln besteht, welche jeweils mittig ihrer Längserstreckung um ein feststehendes Gelenk mit einer sich quer zur Bewegungsrichtung des Touchpads erstreckenden Achse schwenkbar gelagert sind, wobei die Hebel mit ihren einander abgewandten Enden von dem Touchpad oder einem das Touchpad tragenden Touchpadträger in Bewegungsrichtung des Touchpads beaufschlagbar sind, und mit ihren einander zugewandten Enden durch eine flexible Verbindung miteinander verbunden sind.

Die nunmehr einzelnen Hebelmechaniken sind einfach aufgebaut und können platzsparend angeordnet werden, wobei eine Anwendung derselben Hebelmechaniken bei Touchpads unterschiedlicher Größe möglich ist.

Da die Beanspruchung der Hebel immer auf Biegung erfolgt, kann durch die Ausbildung als Blechteile eine gezielt hohe Steifigkeit erreicht werden.

Eine einfache Ausbildung des feststehenden Gelenks besteht darin, dass das feststehende Gelenk einen ortsfest angeordneten Gelenkzapfen aufweist, auf dem der Hebel schwenkbar gelagert ist.

Dabei kann der Hebel eine Gelenkbohrung aufweisen, mit der er auf dem Gelenkbolzen schwenkbar gelagert ist.

Eine besonders bauteilarme Ausbildung des feststehenden Gelenks besteht darin, dass das feststehende Gelenk ein elastischer Verbindungssteg ist, wobei das eine Ende des elastischer Verbindungsstegs ortsfest angeordnet und das andere Ende des elastischen Verbindungsstegs mit dem Hebel verbunden ist.

Dabei können die ortsfest angeordneten Enden der elastischen Verbindungsstege zweier flexibel miteinander verbundener Hebel mit einem gemeinsamen, fest angeordneten Basiselement verbunden sein.

Dadurch kann die Befestigung beider Hebel über ein einziges Bauteil erfolgen.

Ebenfalls zu einer bauteilarmen Ausbildung führt es, wenn die flexible Verbindung an den einander zugewandten Enden der Hebel ein zweiter elastischer Verbindungssteg ist, wobei vorzugsweise die einander zugewandten Enden der Hebel in Bewegungsrichtung zueinander versetzt angeordnet sind und der elastische Verbindungssteg annähernd sich in Bewegungsrichtung erstreckend ausgebildet ist.

Eine andere Ausbildung der flexiblen Verbindung der einander zugewandten Enden der Hebel besteht darin, dass die flexible Verbindung der einander zugewandten Enden der Hebel durch an den Stirnseiten der Hebel in einer der Bewegungsrichtung entsprechenden Ebene sich erstreckende Zahnradabschnitte gebildet sind, deren Zähne ineinander greifen.

Sind die Hebel an ihren einander abgewandten Enden an dem Touchpad oder dem das Touchpad tragenden Touchpadträger um sich quer zur Bewegungsrichtung des Touchpads erstreckende Schwenkachsen schwenkbar angelenkt, so erfolgt die Beaufschlagung der Hebel durch das Touchpad über diese Anlenkung.

Eine Ausbildung dazu besteht darin, dass die einander abgewandten Enden der Hebel sich in Längserstreckungsrichtung erstreckende Langlöcher aufweisen, in die sich quer zur Bewegungsrichtung erstreckende Gelenkzapfen des Touchpads oder des Touchpadträgers hineinragen, wobei die Langlöcher die erforderliche Relativbewegung zwischen den Gelenkzapfen und den Enden der Hebel ermöglichen.

Eine andere bauteilarme Ausbildung besteht darin, dass die einander abgewandten Enden der Hebel über einen dritten elastischen Verbindungssteg mit dem Touchpad oder dem Touchpadträger verbunden sind.

Dabei können die den Hebeln abgewandten Enden der dritten elastischen Verbindungsstege sich quer zur Bewegungsrichtung erstreckende Gelenkbohrungen aufweisen, in die sich quer zur Bewegungsrichtung erstreckende Achszapfen von Touchpad oder Touchpadträger hineinerstrecken.

Es ist aber auch möglich, dass die den Hebeln abgewandten Enden der dritten elastischen Verbindungsstege über einen Verbindungsarm miteinander verbunden sind, der an dem Touchpad oder dem Touchpadträger anordenbar ist.

Eine weitere Möglichkeit zur Beaufschlagung der einander abgewandten Enden der Hebel durch das Touchpad besteht darin, dass das Touchpad oder der Touchpadträger auf den einander abgewandten Enden der Hebel in Auflage sind.

Eine besonders bauteilsparende Ausbildung der Hebelmechanik besteht darin, dass die beiden mit ihren einander zugewandten Enden durch den zweiten elastischen Verbindungssteg verbundenen Hebel und/oder das als elastischer Verbindungssteg ausgebildete feststehende Gelenk und/oder das Basiselement und/oder die dritten elastischen Verbindungsstege an den einander abgewandten Enden der Hebel und/oder der Verbindungsarm als einteiliges Bauteil aus einem federelastischen Werkstoff ausgebildet sind.

Dabei ist das einteilige Bauteil dadurch einfach herstellbar, dass das einteilige Bauteil ein Stanzteil aus einem metallischen Werkstoff ist.

Es ist aber auch möglich, dass das einteilige Bauteil aus Kunststoff besteht und insbesondere ein Kunststoffspritzgussteil ist.

Vorzugsweise besitzt das Touchpad eine rechteckige Umlaufkontur.

Dabei können die Hebelmechaniken an zwei einander gegenüberliegenden Rändern des Touchpads oder zusätzlich auch an einem dritten Rand des Touchpads angeordnet sein.

Eine besonders gute Führungseigenschaft wird erreicht, wenn an jedem Rand des Touchpads eine Hebelmechanik angeordnet ist.

Eine besonders geringe Bauhöhe der Touchpadanordnung wird dadurch erreicht, dass die Hebel an dem umlaufenden Seitenrand des Touchpadträgers mit ihren einander abgewandten Enden angelenkt sind.

Das Touchpad kann durchleuchtbar ausgebildet und von einer oder mehreren Lichtquellen durchleuchtbar sein, wobei die Lichtquellen auf der der sensitiven Bedienoberfläche abgewandten Seite des Touchpads angeordnet sein können.

Dazu ist vorzugsweise auf der der sensitiven Bedienoberfläche des Touchpads oder des Touchpadträgers abgewandten Seite eine die Lichtquellen tragende Leiterplatte angeordnet.

Ist das Touchpad oder der Touchpadträger von einem insbesondere elektromotorischen Antrieb zwischen der Ruheposition und der Absenkposition bewegbar antreibbar, so wird bei Berührung der Bedienoberfläche das Touchpad in seine abgesenkte Absenkposition bewegt. Nach einer Betätigung des Touchpads fährt dieses wieder in seine Ruheposition zurück.

In einfacher Ausbildung kann dabei der Antrieb ein Spindelanrieb sein, dessen mit einem Gewinde versehene Antriebsspindel sich in Bewegungsrichtung erstreckt und in eine mit dem Touchpad oder dem Touchpadträger fest verbundene Spindelmutter eingreift, wobei die Spindelmutter in einem mit dem Touchpad oder dem Touchpadträger verbundenen Trägerelement ausgebildet sein kann.

Es versteht sich, dass auch jede geeignete andere Ausbildung des Antriebs möglich ist.

Ausführungsbeispiele der Erfindung sind in der Zeichnung dargestellt und werden im Folgenden näher beschrieben. Es zeigen:
- Figur 1: eine perspektivische Ansicht einer Touchpadanordnung,
- Figur 2: eine perspektivische Ansicht einer Hebelmechanik der Touchpadanordnung nach Figur 1,
- Figur 3: eine perspektivische Explosionsdarstellung der Touchpadanordnung nach Figur 1 mit einem Touchpadgehäuse,
- Figur 4: eine perspektivische Ansicht der in das Touchpadgehäuse eingebauten Touchpadanordnung,
- Figur 5: ein zweites Ausführungsbeispiel der Hebel einer Hebelmechanik,
- Figur 6: ein drittes Ausführungsbeispiel der Hebel einer Hebelmechanik,
- Figur 7: ein viertes Ausführungsbeispiel der Hebel einer Hebelmechanik.

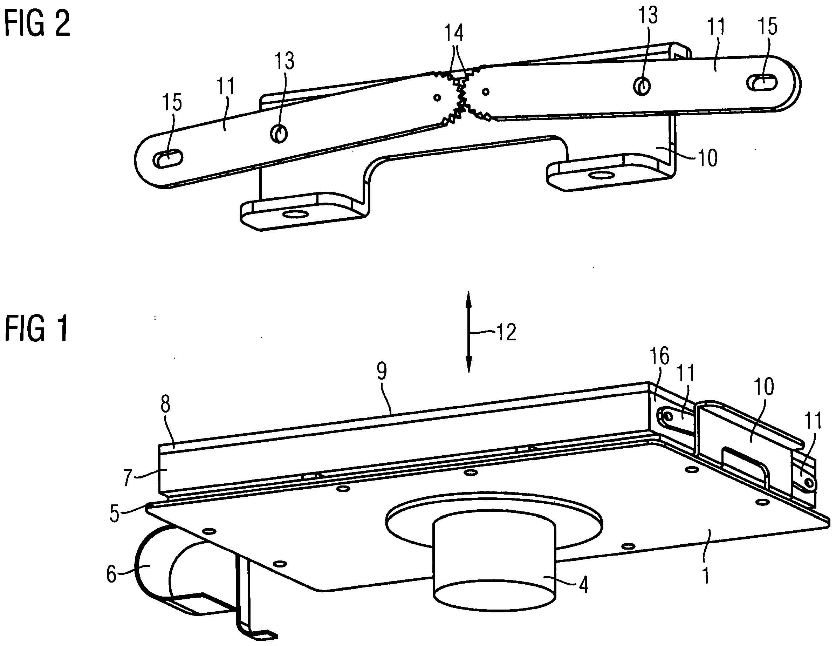

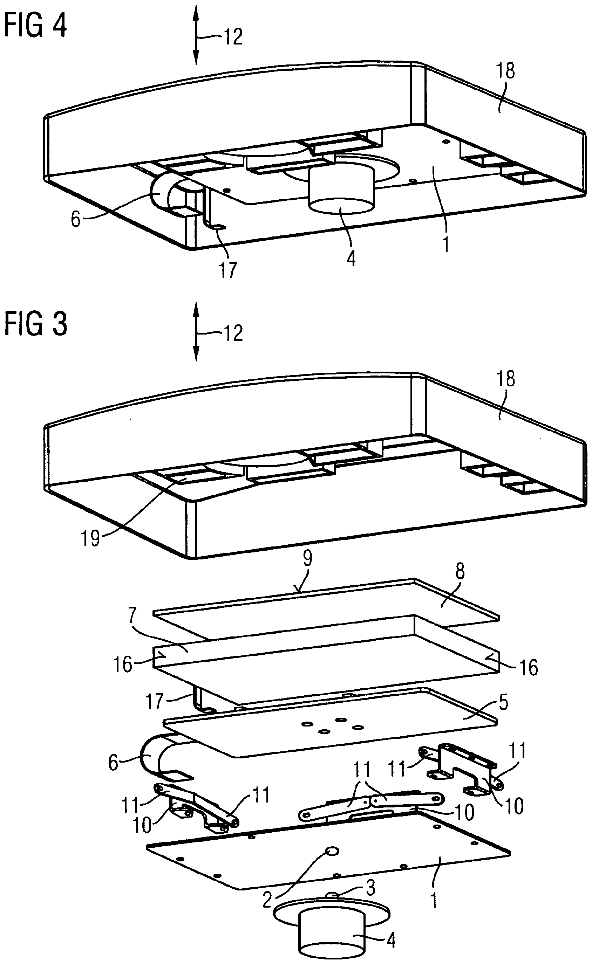

Die in den Figuren 1 bis 4 dargestellte Touchpadanordnung weist einen plattenförmigen Träger 1 mit einer mittigen Bohrung 2 auf, durch die eine mit einem Gewinde versehene Antriebsspindel 3 eines reversiv antreibbaren elektromotorischen Spindelantriebs 4 ragt. Der Spindelantrieb 4 ist an der Unterseite des Trägers 1 feststehend angeordnet, so dass durch Drehung der Antriebsspindel 3 das oberhalb des Trägers 1 angeordnete Bauteilpaket angehoben oder abgesenkt werden kann.

Auf der Oberseite des Trägerelements 1 ist eine Leiterplatte 5 angeordnet, die mehrere nicht dargestellte Lichtquellen trägt, und von der ein flexibler Leiter 6 ausgeht. Auf der Leiterplatte 5 ist wiederum ein plattenförmiger Touchpadträger 7 angeordnet, auf dem ein Touchpad 8 mit einer sensitiven Bedienoberfläche 9 angeordnet ist. Von dem Touchpad 8 geht ein zweiter flexibler Leiter 17 aus.

Touchpad 8, Touchpadträger 7 und Leiterplatte 5 weisen dieselbe rechteckige Umlaufkontur auf, während der rechteckige Träger 1 an allen Seiten über diese Kontur hinausragt.

In drei Randbereichen des Trägers 1 ist jeweils eine Hebelmechanik angeordnet, die aus einem an dem Träger 1 befestigten Halter 10 und einem Paar von Hebeln 11 gleicher Länge besteht.

Die beiden Hebel 11 erstrecken sich annähernd längs zueinander und sind jeweils mittig ihrer Längserstreckung um eine sich quer zur Bewegungsrichtung 12 des Touchpads 8 erstreckende Achse 13 an dem Halter 10 schwenkbar gelagert.

An den Stirnseiten der einander zugewandten Enden weisen die Hebel 11 Zahnradabschnitte 14 auf, deren Zähne ineinander greifen, so dass eine Schwenkbewegung des einen Hebels 11 auf den anderen Hebel übertragen wird.

In den Endbereichen der einander abgewandten Enden der Hebel 11 sind sich in Längserstreckungsrichtung der Hebel 11 erstreckende Langlöcher 15 ausgebildet, in die nicht dargestellte Gelenkzapfen hineinragen, die an den Seitenflächen 16 des Touchpadträgers 7 angeordnet sind.

Die gesamte Touchpadanordnung ist in einem Touchpadgehäuse 18 angeordnet, das ein die Bedienoberfläche 9 freilassendes Fenster 19 aufweist.

Das Berühren und bestimmungsgemäße Betätigen der Bedienoberfläche 9 durch eine Bedienperson wird erfasst und dadurch ein Ansteuersignal für den Spindelantrieb 4 ausgelöst, der das Paket aus Leiterplatte 5, Touchpadträger 7 und Touchpad 8 aus seiner angehobenen Ruheposition um etwa 0,5 mm nach unten in die abgesenkte Absenkposition fährt.

Ist diese Betätigung beendet, fährt der Spindelantrieb 4 das o.g. Paket wieder in seine Ruheposition zurück.

Die Hebelmechaniken sorgen unabhängig von einer mittigen oder außermittigen Beaufschlagung des Touchpads dafür, dass immer eine Bewegung in Bewegungsrichtung ohne Verkippen erfolgt.

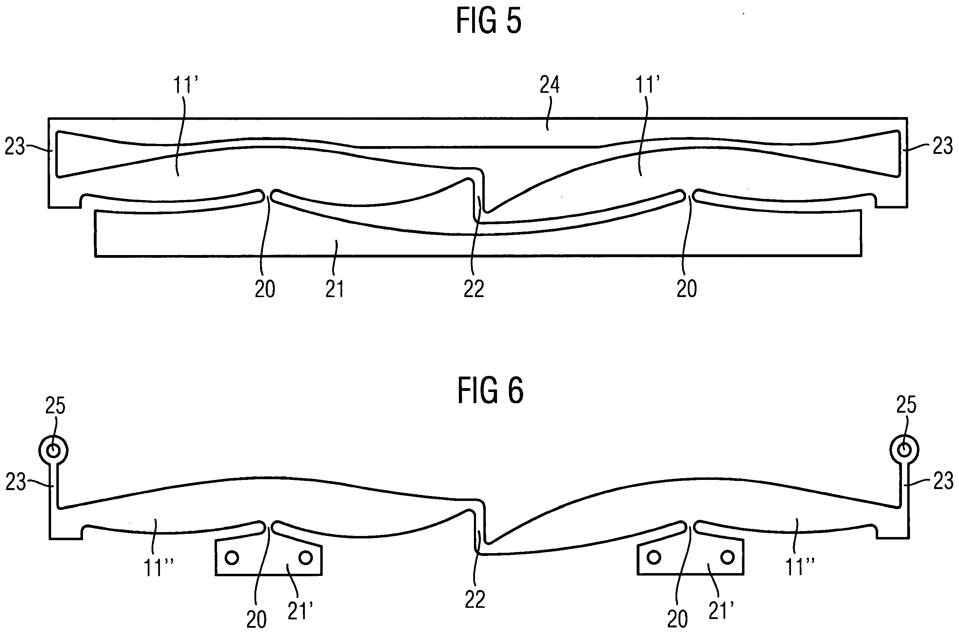

Die in Figur 5 dargestellten Hebel 11' sind mittig ihrer Längserstreckung durch elastische Verbindungsstege 20 mit einem gemeinsamen, fest am Träger 1 anordenbaren Basiselement 21 verbunden.

Weiterhin sind die einander zugewandten Enden der Hebel 11' durch einen zweiten elastischen Verbindungssteg 22 miteinander verbunden, wobei die einander zugewandten Enden der Hebel 11' in Bewegungsrichtung 12 zueinander versetzt angeordnet sind und der zweite Verbindungssteg 22 sich annähernd in Bewegungsrichtung 12 erstreckt.

Die einander abgewandten Enden der Hebel 11' sind über sich annähernd in Bewegungsrichtung 12 erstreckende dritte elastische Verbindungsstege 23 mit einem gemeinsamen Verbindungsarm 24 verbunden, der sich etwa parallel zu den Hebeln 11' erstreckt und an dem Touchpadträger 7 befestigbar ist.

Das Ausführungsbeispiel der Figur 6 entspricht weitgehend dem Ausführungsbeispiel der Figur 5.

Im Unterschied dazu ist dabei kein gemeinsames Basiselement 21 vorhanden, sondern jedem Hebel 11" ein eigenes Basiselement 21' zugeordnet.

Weiterhin sind die dritten Verbindungsstege 23 nicht durch einen gemeinsamen Verbindungsarm 24 miteinander verbunden sondern weisen Gelenkbohrungen 25 auf, in die sich nicht dargestellte quer zur Bewegungsrichtung 12 erstreckende Achszapfen des Touchpadträgers 7 hineinragen.

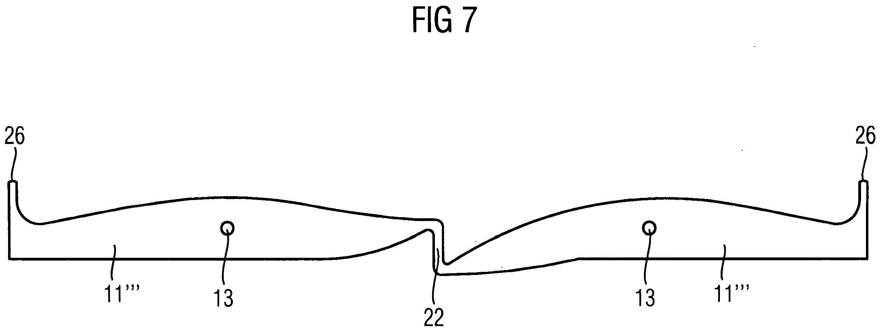

Bei dem Ausführungsbeispiel der Figur 7 sind die Hebel 11''' entsprechend Figur 5 durch einen Verbindungssteg 20 miteinander verbunden.

Sie sind aber entsprechend Figur 2 um Achsen 13 schwenkbar an den Haltern 10 lagerbar.

An ihren voneinander abgewandten Enden sind zum Touchpad 8 gerichtete Auflagenocken 26 ausgebildet, auf denen das Paket aus Leiterplatte 5, Touchpadträger 7 und Touchpad 8 frei auflegbar ist.

## Patentansprüche

1. Touchpadanordnung mit einem Touchpad, das eine sensitive Bedienoberfläche besitzt und durch eine Führungsmechanik verkippungsfrei geführt in einer Bewegungsrichtung zwischen einer angehobenen Ruheposition und einer abgesenkten Absenkposition bewegbar ist, **dadurch gekennzeichnet, dass** an mindestens zwei einander gegenüberliegenden Seitenbereichen des Touchpads (8) jeweils eine Hebelmechanik angeordnet ist, die aus zwei annähernd längs sich zueinander erstreckenden Hebeln (11, 11', 11", 11"') besteht, welche jeweils mittig ihrer Längserstreckung um ein feststehendes Gelenk mit einer sich quer zur Bewegungsrichtung (12) des Touchpads (8) erstreckenden Achse (13) schwenkbar gelagert sind, wobei die Hebel (11, 11', 11", 11"') mit ihren einander abgewandten Enden von dem Touchpad (8) oder einem das Touchpad (8) tragenden Touchpadträger (7) in Bewegungsrichtung (12) des Touchpads (8) beaufschlagbar sind, und mit ihren einander zugewandten Enden durch eine flexible Verbindung miteinander verbunden sind.

2. Touchpadanordnung nach Anspruch 1, **dadurch gekennzeichnet, dass** das feststehende Gelenk einen ortsfest angeordneten Gelenkzapfen aufweist, auf dem der Hebel (11, 11") schwenkbar gelagert ist.

3. Touchpadanordnung nach Anspruch 2, **dadurch gekennzeichnet, dass** der Hebel (11, 11") eine Gelenkbohrung aufweist, mit der er auf dem Gelenkzapfen schwenkbar gelagert ist.

4. Touchpadanordnung nach Anspruch 1, **dadurch gekennzeichnet, dass** das feststehende Gelenk ein elastischer Verbindungssteg (20) ist, wobei das eine Ende des elastischer Verbindungsstegs (20) ortsfest angeordnet und das andere Ende des elastischen Verbindungsstegs (20) mit dem Hebel (11', 11", 11"') verbunden ist.

5. Touchpadanordnung nach Anspruch 4, **dadurch gekennzeichnet, dass** die ortsfest angeordneten Enden der elastischen Verbindungsstege (20) zweier flexibel miteinander verbundener Hebel (11') mit einem gemeinsamen, fest angeordneten Basiselement (21) verbunden sind.

6. Touchpadanordnung nach einem der vorhergehenden Ansprüche, **dadurch gekennzeichnet, dass** die flexible Verbindung an den einander zugewandten Enden der Hebel (11', 11", 11"') ein zweiter elastischer Verbindungssteg (22) ist.

7. Touchpadanordnung nach Anspruch 6, **dadurch gekennzeichnet, dass** die einander zugewandten Enden der Hebel (11', 11", 11"') in Bewegungsrichtung (12) zueinander versetzt angeordnet sind und der zweite elastische Verbindungssteg (22) annähernd sich in Bewegungsrichtung (12) erstreckend ausgebildet ist.

8. Touchpadanordnung nach einem der Ansprüche 1 bis 5, **dadurch gekennzeichnet, dass** die flexible Verbindung der einander zugewandten Enden der Hebel (11) durch an den Stirnseiten der Hebel (11) in einer der Bewegungsrichtung (12) entsprechenden Ebene sich erstreckende Zahnradabschnitte (14) gebildet sind, deren Zähne ineinander greifen.

9. Touchpadanordnung nach einem der vorhergehenden Ansprüche, **dadurch gekennzeichnet, dass** die Hebel (11, 11") an ihren einander abgewandten Enden an dem Touchpad oder dem das Touchpad tragenden Touchpadträger um sich quer zur Bewegungsrichtung des Touchpads erstreckende Schwenkachsen schwenkbar angelenkt sind.

10. Touchpadanordnung nach Anspruch 9, **dadurch gekennzeichnet, dass** die einander abgewandten Enden der Hebel (11) sich in Längserstreckungsrichtung erstreckende Langlöcher (15) aufweisen, in die sich quer zur Bewegungsrichtung (12) erstreckende Gelenkzapfen des Touchpads oder des Touchpadträgers hineinragen.

11. Touchpadanordnung nach einem der Ansprüche 1 bis 8, **dadurch gekennzeichnet, dass** die einander abgewandten Enden der Hebel (11, 11') über einen dritten elastischen Verbindungssteg (23) mit dem Touchpad oder dem Touchpadträger verbunden sind.

12. Touchpadanordnung nach Anspruch 11, **dadurch gekennzeichnet, dass** die den Hebeln (11, 11', 11") abgewandten Enden der dritten elastischen Verbindungsstege (23) sich quer zur Bewegungsrichtung (12) erstreckende Gelenkbohrungen aufweisen, in die sich quer zur Bewegungsrichtung (12) erstreckende Achszapfen von Touchpad oder Touchpadträger hineinerstrecken.

13. Touchpadanordnung nach Anspruch 11, **dadurch gekennzeichnet, dass** die den Hebeln (11, 11', 11") abgewandten Enden der dritten elastischen Verbindungsstege (23) über einen Verbindungsarm (24) miteinander verbunden sind, der an dem Touchpad oder dem Touchpadträger anordenbar ist.

14. Touchpadanordnung nach einem der Ansprüche 1 bis 8, **dadurch gekennzeichnet, dass** das Touchpad oder der Touchpadträger auf den einander abgewandten Enden der Hebel (11"') in Auflage sind.

15. Touchpadanordnung nach einem der Ansprüche 4 bis 7 und 11 bis 14, **dadurch gekennzeichnet, dass** die beiden mit ihren einander zugewandten Enden durch den zweiten elastischen Verbindungssteg (22) miteinander verbundenen Hebel (11, 11', 11", 11"') und/oder das als elastischer Verbindungssteg (20) ausgebildete feststehende Gelenk und/oder das Basiselement (21) und/oder die dritten elastischen Verbindungsstege (23) an den einander abgewandten Enden der Hebel (11', 11", 11"') und/oder der Verbindungsarm (24) als einteiliges Bauteil aus einem federelastischen Werkstoff ausgebildet sind.

16. Touchpadanordnung nach Anspruch 15, **dadurch ge - kennzeichnet,** dass das einteilige Bauteil ein Stanzteil aus einem metallischen Werkstoff ist.

17. Touchpadanordnung nach einem der vorhergehenden Ansprüche, **dadurch gekennzeichnet, dass** das Touchpad (8) eine rechteckige Umlaufkontur besitzt.

18. Touchpadanordnung nach einem der vorhergehenden Ansprüche, **dadurch gekennzeichnet, dass** die Hebel (11, 11', 11", 11"')an dem umlaufenden Seitenrand des Touchpadträgers (7) mit ihren einander abgewandten Enden angelenkt sind.

19. Touchpadanordnung nach einem der vorhergehenden Ansprüche, **dadurch gekennzeichnet, dass** das Touchpad (8) durchleuchtbar ausgebildet und von einer oder mehreren Lichtquellen durchleuchtbar ist.

20. Touchpadanordnung nach Anspruch 19, **dadurch ge - kennzeichnet,** dass die Lichtquellen auf der der sensitiven Bedienoberfläche (9) abgewandten Seite des Touchpads (8) angeordnet ist.

21. Touchpadanordnung nach Anspruch 20, **dadurch ge - kennzeichnet,** dass auf der der sensitiven Bedienoberfläche (9) des Touchpads (8) oder des Touchpadträgers eine die Lichtquellen tragende Leiterplatte (5) angeordnet ist.

22. Touchpadanordnung nach einem der vorhergehenden Ansprüche, **dadurch gekennzeichnet, dass** das Touchpad (8) oder der Touchpadträger von einem insbesondere elektromotorischen Antrieb zwischen der Ruheposition und der Absenkposition bewegbar antreibbar ist.

23. Touchpadanordnung nach Anspruch 22, **dadurch ge - kennzeichnet,** dass der Antrieb ein Spindelantrieb (4) ist, dessen mit einem Gewinde versehene Antriebsspindel (3) sich in Bewegungsrichtung (12) erstreckt und in eine mit dem Touchpad oder dem Touchpadträger fest verbundene Spindelmutter eingreift.

24. Touchpadanordnung nach Anspruch 23, **dadurch gekennzeichnet, dass** die Spindelmutter in einem mit dem Touchpad oder dem Touchpadträger (7) verbundenen Träger (1) ausgebildet ist.

## Claims

1. Touch pad arrangement having a touch pad which has a sensitive operating surface and which can be moved in a direction of movement between a raised rest position and a lowered position while being guided without tipping by a guide mechanism, **characterized in that** a lever mechanism is arranged on at least two mutually opposite side areas of the touch pad (8), the lever mechanism consisting of two levers (11, 11', 11", 11"') which extend approximately longitudinally relative to one another and, in the center of their length, are each mounted in such a way that they can pivot about a fixed joint with a pivot (13) which extends transversely to the direction of movement (12) of the touch pad (8), the levers (11, 11', 11", 11"') being capable of being acted upon in the direction of movement (12) of the touch pad (8) at the mutually remote lever ends by the touch pad (8) or by a touch pad support (7) supporting the touch pad (8), and being connected to each other at their mutually adjacent ends by a flexible connection.

2. Touch pad arrangement according to Claim 1, **characterized in that** the fixed joint has a pivot pin arranged in a fixed location, on which the lever (11, 11") is pivotably mounted.

3. Touch pad arrangement according to Claim 2, **characterized in that** the lever (11, 11") has a pivot hole by means of which it is pivotably mounted on the pivot pin.

4. Touch pad arrangement according to Claim 1, **characterized in that** the fixed joint is an elastic connecting web (20), one end of the elastic connecting web (20) being arranged in a fixed location and the other end of the elastic connecting web (20) being connected to the lever (11', 11", 11"').

5. Touch pad arrangement according to Claim 4, **characterized in that** those ends of the elastic connecting webs (20) of two flexibly interconnected levers (11') which are arranged in a fixed location are connected to a common base element (21) arranged in a fixed manner.

6. Touch pad arrangement according to one of the preceding claims, **characterized in that** the flexible connection at the mutually adjacent ends of the levers (11', 11", 11"') is a second elastic connecting web (22).

7. Touch pad arrangement according to Claim 6, **characterized in that** the mutually adjacent ends of the levers (11', 11", 11"') are arranged offset relative to one another in the direction of movement (12), and the second elastic connecting web (22) is designed to extend approximately in the direction of movement (12).

8. Touch pad arrangement according to one of Claims 1 to 5, **characterized in that** the flexible connection between the mutually adjacent ends of the levers (11) are formed by gear segments (14) which extend on the front ends of the levers (11) in a plane corresponding to the direction of movement (12) and the teeth of which engage in one another.

9. Touch pad arrangement according to one of the preceding claims, **characterized in that**, at their mutually remote ends, the levers (11, 11") are hinged on the touch pad or on the touch pad support supporting the touch pad in such a way that they can be pivoted about pivot axes extending transversely to the direction of movement of the touch pad.

10. Touch pad arrangement according to Claim 9, **characterized in that** the mutually remote ends of the levers (11) have elongate holes (15) which extend in the direction of longitudinal extension and into which pivot pins of the touch pad or of touch pad support which extend transversely to the direction of movement (12) project.

11. Touch pad arrangement according to one of Claims 1 to 8, **characterized in that** the mutually remote ends of the levers (11, 11') are connected to the touch pad or to the touch pad support by means of a third elastic connecting web (23).

12. Touch pad arrangement according to Claim 11, **characterized in that** those ends of the third elastic connecting webs (23) which are remote from the levers (11, 11', 11") have pivot holes which extend transversely to the direction of movement (12) and into which there extend journals of the touch pad or of the touch pad support which extend transversely to the direction of movement (12).

13. Touch pad arrangement according to Claim 11, **characterized in that** those ends of the third elastic connecting webs (23) which are remote from the levers (11, 11', 11") are connected to one another by a connecting arm (24) which can be arranged on the touch pad or on the touch pad support.

14. Touch pad arrangement according to one of Claims 1 to 8, **characterized in that** the touch pad or the touch pad support bear on the mutually remote ends of the levers (11''').

15. Touch pad arrangement according to one of Claims 4 to 7 and 11 to 14, **characterized in that** the two levers (11, 11', 11", 11"'), which are connected to one another at their mutually adjacent ends by the second elastic connecting web (22), and/or the fixed joint designed as an elastic connecting web (20) and/or the base element (21) and/or the third elastic connecting webs (23) at the mutually remote ends of the levers (11', 11", 11"') and/or the connecting arm (24) are designed as a one-piece component made from a material of spring elasticity.

16. Touch pad arrangement according to Claim 15, **characterized in that** the one-piece component is a stamping composed of a metallic material.

17. Touch pad arrangement according to one of the preceding claims, **characterized in that** the touch pad (8) has a rectangular peripheral contour.

18. Touch pad arrangement according to one of the preceding claims, **characterized in that** the levers (11, 11', 11", 11"') are hinged on the peripheral lateral edge of the touch pad support (7) by their mutually remote ends.

19. Touch pad arrangement according to one of the preceding claims, **characterized in that** the touch pad (8) is designed to allow light to be shone through and can be shone through by one or more light sources.

20. Touch pad arrangement according to Claim 19, **characterized in that** the light sources are arranged on the side of the touch pad (8) facing away from the sensitive operating surface (9).

21. Touch pad arrangement according to Claim 20, **characterized in that** a circuit board (5) carrying the light sources is arranged on the (lacuna) the sensitive operating surface (9) of the touch pad (8) or of the touch pad support.

22. Touch pad arrangement according to one of the preceding claims, **characterized in that** the touch pad (8) or the touch pad support can be driven in such a way that it can be moved between the rest position and the lowered position by a drive, especially an electric-motor drive.

23. Touch pad arrangement according to Claim 22, **characterized in that** the drive is a spindle drive (4), the drive spindle (3) of which, which is provided with a thread, extends in the direction of movement (12) and engages in a spindle nut firmly connected to the touch pad or to Touch pad support.

24. Touch pad arrangement according to Claim 23, **characterized in that** the spindle nut is formed in a support (1) connected to the touch pad or to the touch pad support (7).

## Revendications

1. Système de pavé tactile comportant un pavé tactile qui possède une surface de commande sensible et est guidé de manière non basculante par l'intermédiaire d'un dispositif mécanique de guidage dans une direction de mouvement entre une position de repos relevée et une position basse abaissée, **caractérisé en ce qu'**un dispositif mécanique à levier est respectivement disposé sur au moins deux régions latérales opposées l'une à l'autre du pavé tactile (8), lequel dispositif mécanique à levier est constitué de deux leviers (11, 11', 11", 11"') s'étendant approximativement longitudinalement l'un par rapport à l'autre, qui sont respectivement montés pivotants au centre de leur extension longitudinale autour d'une articulation fixe au moyen d'un axe (13) s'étendant transversalement à la direction de mouvement (12) du pavé tactile (8), dans lequel les leviers (11, 11', 11", 11''') peuvent être sollicités dans la direction de mouvement (12) du pavé tactile (8) par leurs extrémités tournées à l'opposé l'une de l'autre par le pavé tactile (8) ou par un support de pavé tactile (7) supportant le pavé tactile (8), et sont reliés l'un à l'autre par leurs extrémités tournées l'une vers l'autre par l'intermédiaire d'une liaison flexible.

2. Système de pavé tactile selon la revendication 1, **caractérisé en ce que** l'articulation fixe comporte un pivot disposé en position fixe, sur lequel le levier (11, 11") est monté pivotant.

3. Système de pavé tactile selon la revendication 2, **caractérisé en ce que** le levier (11, 11") comporte un alésage d'articulation au moyen duquel il est monté pivotant sur le pivot.

4. Système de pavé tactile selon la revendication 1, **caractérisé en ce que** l'articulation fixe est une barre de liaison élastique (20), dans lequel ladite extrémité de la barre de liaison élastique (20) est disposée en position fixe et l'autre extrémité de la barre de liaison élastique (20) est reliée au levier (11', 11", 11"').

5. Système de pavé tactile selon la revendication 4, **caractérisé en ce que** les extrémités disposées en position fixe des barres de liaison élastiques (20) de deux leviers (11') reliés l'un à l'autre de manière flexible sont reliées à un élément de base (21) commun disposé de manière fixe.

6. Système de pavé tactile selon l'une quelconque des revendications précédentes, **caractérisé en ce que** la liaison flexible aux extrémités tournées l'une vers l'autre des leviers (11', 11", 11"') est une deuxième barre de liaison élastique (22).

7. Système de pavé tactile selon la revendication 6, **caractérisé en ce que** les extrémités tournées l'une vers l'autre des leviers (11', 11", 11"') sont disposées de manière décalée l'une par rapport à l'autre dans la direction de mouvement (12) et la deuxième barre de liaison élastique (22) est réalisée de manière à s'étendre approximativement dans la direction de mouvement (12).

8. Système de pavé tactile selon l'une quelconque des revendications 1 à 5, **caractérisé en ce que** les liaisons flexibles des extrémités tournées l'une vers l'autre des leviers (11) sont formées par des sections d'engrenages (14) s'étendant sur les faces avant des leviers (11) dans un plan correspondant à la direction de mouvement (12), dont les dents s'engrènent les unes dans les autres.

9. Système de pavé tactile selon l'une quelconque des revendications précédentes, **caractérisé en ce que** les leviers (11, 11") s'articulent de manière pivotante sur leurs extrémités opposées l'une à l'autre sur le pavé tactile ou le support de pavé tactile supportant le pavé tactile autour d'axes de pivotement s'étendant transversalement à la direction de mouvement du pavé tactile.

10. Système de pavé tactile selon la revendication 9, **caractérisé en ce que** les extrémités opposées l'une à l'autre des leviers (11) comportent des trous allongés (15) s'étendant dans la direction d'extension longitudinale, dans lesquels pénètrent des pivots s'étendant transversalement à la direction de mouvement (12) du pavé tactile ou du support de pavé tactile.

11. Système de pavé tactile selon l'une quelconque des revendications 1 à 8, **caractérisé en ce que** les extrémités opposées l'une à l'autre des leviers (11, 11') sont reliées par l'intermédiaire d'une troisième barre de liaison élastique (23) au pavé tactile ou au support de pavé tactile.

12. Système de pavé tactile selon la revendication 11, **caractérisé en ce que** les extrémités opposées aux leviers (11, 11', 11") des troisièmes barres de liaison élastiques (23) comportent des alésages d'articulation s'étendant transversalement à la direction de mouvement (12), dans lesquels pénètrent des pivots du pavé tactile ou du support de pavé tactile s'étendant transversalement à la direction de mouvement (12).

13. Système de pavé tactile selon la revendication 11, **caractérisé en ce que** les extrémités opposées aux leviers (11, 11', 11") des troisièmes barres de liaison élastiques (23) sont reliées l'une à l'autre par l'intermédiaire d'un bras de liaison (24) qui peut être disposé sur le pavé tactile ou le support de pavé tactile.

14. Système de pavé tactile selon l'une quelconque des revendications 1 à 8, **caractérisé en ce que** le pavé tactile ou le support de pavé tactile est en appui sur les extrémités opposées l'une à l'autre des leviers (11''').

15. Système de pavé tactile selon l'une quelconque des revendications 4 à 7 et 11 à 14, **caractérisé en ce que** les deux leviers (11, 11', 11", 11"') reliés l'un à l'autre par leurs extrémités tournées l'une vers l'autre par l'intermédiaire de la deuxième barre de liaison élastique (22) et/ou l'articulation fixe réalisée sous la forme d'une barre de liaison élastique (20) et/ou l'élément de base (21) et/ou les troisièmes barres de liaison élastiques (23) sur les extrémités opposées l'une à l'autre des leviers (11', 11", 11"') et/ou le bras de liaison (24) est/sont réalisé(s) sous la forme d'un composant monolithique à partir d'un matériau déformable élastiquement.

16. Système de pavé tactile selon la revendication 15, **caractérisé en ce que** le composant monolithique est une pièce découpée à partir d'un matériau métallique.

17. Système de pavé tactile selon l'une quelconque des revendications précédentes, **caractérisé en ce que** le pavé tactile (8) possède un contour circonférentiel rectangulaire.

18. Système de pavé tactile selon l'une quelconque des revendications précédentes, **caractérisé en ce que** les leviers (11, 11', 11", 11"') s'articulent sur le bord périphérique latéral du support de pavé tactile (7) par leurs extrémités opposées l'une à l'autre.

19. Système de pavé tactile selon l'une quelconque des revendications précédentes, **caractérisé en ce que** le pavé tactile (8) est réalisé de manière à pouvoir être éclairé en transparence et peut être éclairé en transparence par une ou plusieurs sources lumineuses.

20. Système de pavé tactile selon la revendication 19, **caractérisé en ce que** les sources lumineuses sont disposées sur la face du pavé tactile (8) qui est tournée à l'opposé de la surface de commande sensible (9).

21. Système de pavé tactile selon la revendication 20, **caractérisé en ce qu'**une carte de circuit imprimé (5) supportant les sources lumineuses est disposée sur la surface de commande sensible (9) du pavé tactile (8) ou du support de pavé tactile.

22. Système de pavé tactile selon l'une quelconque des revendications précédentes, **caractérisé en ce que** le pavé tactile (8) ou le support de pavé tactile peut être entraîné en mouvement par un mécanisme d'entraînement, notamment à moteur électrique, entre la position de repos et la position basse.

23. Système de pavé tactile selon la revendication 22, **caractérisé en ce que** le mécanisme d'entraînement est un dispositif d'entraînement à broche (4) dont la broche d'entraînement (3) munie d'un filetage s'étend dans la direction de mouvement (12) et s'engage dans un écrou de broche relié de manière fixe au pavé tactile ou au support de pavé tactile.

24. Système de pavé tactile selon la revendication 23, **caractérisé en ce que** l'écrou de broche est réalisé dans un support (1) relié au pavé tactile ou au support de pavé tactile (7).
